# EUROPEAN PATENT SPECIFICATION

(11) **EP 2 093 263 B1**
(45) Date of publication and mention of the grant of the patent: **15.09.2010**
(21) Application number: 09250450.5
(22) Date of filing: 20.02.2009
(51) Int. Cl.: C09D 5/00

(54) **Fire protection & retardant coatings**
Brandschutzbeschichtungen
Revêtements ignifuges

(30) Priority: 21.02.2008 GB 0803131
(43) Date of publication of application: 26.08.2009
(73) Proprietor: Intumescent Systems Limited, Barfreston Dover Kent CT15 7JG (GB)
(72) Inventor: Ward, Derek Alfred, Dover Kent, CT15 7JG (GB)
(74) Representative: Sayer, Robert David

(56) References cited:
- WO-A-93/11196
- WO-A-2006/067478
- DE-A1- 2 227 188
- GB-A- 2 071 111
- US-B1- 6 613 391
- DATABASE WPI Week 200449 Thomson Scientific, London, GB; AN 2004-501508 XP002523612 & JP 2004 100059 A (ASAHI FIBREGLASS KK) 2 April 2004 (2004-04-02)
- DATABASE WPI Week 200413 Thomson Scientific, London, GB; AN 2004-125720 XP002523613 & JP 2003 165886 A (NIPPON SHOKUBAI CO LTD) 10 June 2003 (2003-06-10)

## Description

This invention relates to fire protection/retardant coatings and more especially to clear intumescent coatings for wood and wood-related surfaces. Fire retardant coatings achieve Class 0 and Class 1 spread of flame ratings and fire protection coatings achieve up to 60 minutes protection against the spread of flames.

Intumescent coatings for wood and wood-related surfaces are known but many of these do not provide a clear and transparent finish for the treated surfaces and others comprise a two pack system which requires dual application or pre-mixing before application.

Such coatings are disclosed in WO2006/067478, US6613391, WO93/11196, DE2227188 and GB2071111. The first of these documents discloses a liquid intumescent coating composition which comprises a resin system including a polymeric component, an unsaturated monomeric component and an intumescent ingredient. The second document describes a process for achieving a fire and flame retardant effect and the third document is directed to a composition with intumescent properties in which an amino-formaldehyde resin and mixture of monoesters and diesters of orthophosphoric acid with one or more polyols. None of the documents discloses an intumescent water-based coating which dries to a transparent finish.

The present invention sets out in one aspect to provide an improved intumescent coating which dries to a clear transparent finish and comprises a single pack system, namely a coating which can be applied direct from a single container in which it is supplied to a customer.

In one aspect, the invention provides an intumescent water-based coating having the features of claim 1.

In a preferred embodiment, the ratio of binder to charring agent is 2.7 to 1.0.

The charring agent preferably comprises pentaerythritol and the blowing agent preferably comprises a solution of dicyanhamide phosphate.

The coating preferably also includes ammonium poly phosphate (APP), mono ethylene glycol , a phosphate surfactant, a defoaming surfactant and an acticide.

One example of a water-based intumescent fire retardant and fire protective clear coating will now be described by way of example only.

The coating was produced in batches of approximately 110 litres, each batch comprising the ingredients listed below in the quantities specified.

Initially 35.500 kg of acid catalyst ammonium polyphosphate (APP), 27.000kg of water-based epoxy emulsion binder and 12.000kg of charring agent pentaerythritol were fast mixed for successive periods of 5 and 10 minutes to produce a homogeneous paste.

Secondly, 11 .000kg of flame retardant blowing agent dicyandiamide phosphate solution was added and fast mixed for a period of 15 minutes.

Thirdly, 14.250kg of flame retardant blowing agent dicyanhamide phosphate, 1.186kg of mono ethylene glycol to improve the film forming properties of the coating and to lower its freezing point, 1.186kg of phosphate surfactant to aid dispersion of the particle content of the mix, 0.178kg of a defoaming surfactant, and 0.024kg of an acticide were added and mixed for a further 15 minutes.

Finally, 32.000kg of water-based epoxy emulsion binder was added and the resultant mix fast mixed for 20 minutes.

The epoxy emulsion acts as a binder and aids charring of the coating in the event that the surface to which it is applied is subjected to excessive heat.

The presence of the blowing agent dicyanhamide phosphate ensures that the coating, when dried on a surface, is clear and transparent. The blowing agent produces gas and foaming in the char during the intumescent process.

The charring agent pentaerythritol ensures that the char, when produced, has the required consistency to prevent or retard the onset of flames.

The acid catalyst APP catalyses cross-linking during the char process.

An important feature of coatings, in accordance with the invention is the synergy between the water-based epoxy emulsion binder and the charring agent pentaerythritol. This synergy enables less charring agent to be employed thereby ensuring that a coating when applied to a wood or wood-related product dries to a clear and transparent finish. If the ratio of binder to charring agent is less than 2.5 to 1, a coated surface will not dry to a clear and transparent finish. If this ratio exceeds 3 to 1, the flame retardant properties of the coating are degraded.

Coatings in accordance with the invention have particular application for providing fire protection for wood or wood-related surfaces where the appearance of the surface has to remain the same after coating. Such surfaces include panelled walls, doors and other items to be found in stately homes and the like. An applied coating does not adversely affect the appearance or quality of the coated item but does provide upwards of 60 minute fire protection. No special surface preparation is normally required provided the surface is dry and clean. Two or more coats can be applied and because the coating is quick drying, successive coatings can be applied in a relatively short period of time.

It will be appreciated that the foregoing is exemplary of solutions in accordance with the invention and that modifications can readily be made thereto without departing from the true scope of the invention.

## Claims

1. An intumescent water-based coating which dries to a transparent finish, the coating comprising a single pack emulsion including a solution of dicyanhamide phosphate which acts as a flame retardant blowing agent, pentaerythritol which acts as a charring agent and an epoxy resin water soluble binder, the coating being **characterised in that** the ratio of water soluble binder to pentaerythritol is between 2.5 and 3.0 to 1.

2. A coating as claimed in claim 1, wherein the ratio of water soluble binder to charring agent is 2.7 to 1.0.

3. A coating as claimed in claim 1 or claim 2 further including ammonium polyphosphate, mono ethylene glycol, a phosphate surfactant, a defoaming surfactant and an acticide.

## Patentansprüche

1. Intumeszenzbeschichtung auf Wasserbasis, die zu einem transparenten Finish trocknet, wobei die Beschichtung eine Einzelpack-Emulsion umfasst, die eine Lösung von Dicyanamidphosphat, die als ein flammhemmendes Treibmittel fungiert, Pentaerythrit, das als ein Verkohlungsmittel fungiert, und ein wasserlösliches Epoxidharzbindemittel enthält, wobei die Beschichtung **dadurch gekennzeichnet ist, dass** das Verhältnis von wasserlöslichem Bindemittel zu Pentaerythrit zwischen 2,5 und 3,0 zu 1 liegt.

2. Beschichtung nach Anspruch 1, wobei das Verhältnis von wasserlöslichem Bindemittel zu Verkohlungsmittel 2,7 bis 1,0 beträgt.

3. Beschichtung nach Anspruch 1 oder 2, die weiterhin Ammoniumpolyphosphat, Monoethylenglykol, ein Phosphattensid, ein Entschäumungstensid und ein Acticide enthält.

## Revendications

1. Enduit intumescent à base d'eau qui sèche en un fini transparent, l'enduit comprenant une émulsion monocouche incluant une solution de phosphate de dicyanoamide qui agit comme agent d'expansion ignifugeant, du pentaérythritol qui agit comme agent de carbonisation et un liant hydrosoluble de résine époxy, l'enduit étant **caractérisé en ce que** le rapport entre liant hydrosoluble et pentaérythritol est compris entre 2,5 et 3,0 sur 1.

2. Enduit selon la revendication 1, dans lequel le rapport entre liant hydrosoluble et agent de carbonisation est de 2,7 sur 1,0.

3. Enduit selon la revendication 1 ou la revendication 2, incluant en outre du polyphosphate d'ammonium, du monoéthylèneglycol, un tensioactif de phosphate, un tensioactif antimousse et un acticide.
